# FASCICULE DE BREVET EUROPEEN

(11) **EP 1 521 446 B1**
(45) Date de publication et mention de la délivrance du brevet: **23.08.2006**
(21) Numéro de dépôt: 04292303.7
(22) Date de dépôt: 24.09.2004
(51) Int. Cl.: H04M 11/04

(54) **Système de programmation de transmetteur d'alarme par l'intermédiaire d'un poste téléphonique**
System zur Programmierung eines Alarmsenders mittels eines Telefongeräts
System for programming an alarm transmitter using a telephone set

(30) Priorité: 30.09.2003 FR 0311419
(43) Date de publication de la demande: 06.04.2005
(73) Titulaire: DELTA DORE Société Anonyme, F-35270 Combourg (FR)
(72) Inventeur: Le Tutour, Jean, 22690 Pleudihen sur Rance (FR)
(74) Mandataire: Maillet, Alain

(56) Documents cités:
- EP-A- 0 751 661
- WO-A-00/18086
- US-A- 4 791 658
- US-A- 5 745 849
- PATENT ABSTRACTS OF JAPAN vol. 016, no. 221 (E-1205), 22 mai 1992 (1992-05-22) & JP 04 038047 A (CANON INC), 7 février 1992 (1992-02-07)

## Description

La présente invention concerne un système de programmation de transmetteur d'alarme par l'intermédiaire d'un poste téléphonique. La présente invention concerne aussi un procédé de programmation d'un tel système de programmation.

Le document US-4,791,658 divulgue une installation d'alarme qui être commandée par l'intermédiaire d'un téléphone local ou distant, après l'identification d'un code généré par un utilisateur à l'aide des touches du téléphone ce qui oblige pour l'utilisateur à se rappeler du code.

Une installation d'alarme centralisée de type bien connu comprend un certain nombre de capteurs de différents types installés, par exemple, dans des locaux à surveiller, ces capteurs transmettant des informations à une centrale d'alarme adaptée à traiter ces informations et à générer, le cas échéant, des alarmes correspondant à des incidents détectés par les capteurs. Par ailleurs, la centrale d'alarme est généralement raccordée à un transmetteur téléphonique permettant notamment de transmettre sur une ligne téléphonique classique des informations correspondant à des incidents détectés par les capteurs. Généralement, ce transmetteur est connecté en parallèle sur la ligne téléphonique desservant les locaux à surveiller. Le transmetteur de l'installation d'alarme fonctionne conformément à un programme préalablement sélectionné par un usager au moyen d'un organe de programmation de type clavier ou analogue.

Afin notamment de réduire le coût d'une telle installation d'alarme et de rendre plus simple son utilisation, il a été proposé d'utiliser comme organe de programmation un poste téléphonique relié à la ligne téléphonique desservant les locaux à surveiller sur laquelle le transmetteur téléphonique d'alarme est connecté. Par exemple, la demande de brevet français FR 2 735 893 décrit un système d'alarme dans lequel des commutateurs associés au transmetteur téléphonique d'alarme sont interposés entre une ligne téléphonique desservant les locaux à surveiller et un poste téléphonique de telle sorte que, dans un mode normal, le poste téléphonique est relié directement à la ligne téléphonique et, dans un mode de programmation de transmetteur d'alarme, le poste téléphonique est relié aux circuits internes du transmetteur, ces derniers assurant l'alimentation du poste et permettant un échange d'informations de programmation entre le poste et une unité centrale du transmetteur. Les informations transmises de cette unité centrale au poste téléphonique sont des signaux de synthèse vocale constituant des messages audiophoniques de menu de programmation. Un utilisateur va recevoir dans l'écouteur du combiné du poste téléphonique une séquence de consignes qu'il peut valider sélectivement en appuyant sur une des touches du clavier du poste téléphonique. La programmation du transmetteur d'alarme peut donc se faire directement par l'intermédiaire du poste téléphonique.

Le système de programmation de transmetteur d'alarme par l'intermédiaire d'un poste téléphonique tel qu'il vient d'être décrit présente un certain nombre d'inconvénients. Tout d'abord, il nécessite l'utilisation d'un moyen de commande à distance des commutateurs associés au transmetteur d'alarme, par exemple une télécommande communiquant avec le transmetteur téléphonique d'alarme par onde radio. Ensuite, il nécessite la mise en oeuvre d'un moyen d'alimentation du poste téléphonique en mode de programmation d'alarme. De ce fait, un transmetteur d'alarme programmable selon ce procédé reste coûteux.

Un but de la présente invention est de proposer un système amélioré de programmation de transmetteur d'alarme par l'intermédiaire d'un poste téléphonique permettant de résoudre les problèmes qui viennent d'être évoqués.

A cet effet, est proposé un système de programmation de transmetteur d'alarme pour une installation d'alarme, l'installation d'alarme étant installée dans une zone à surveiller desservie par une ligne téléphonique reliée à au moins un poste téléphonique et comprenant des capteurs répartis dans la zone à surveiller, une centrale d'alarme communiquant avec les capteurs et un transmetteur téléphonique raccordé à la centrale d'alarme et à la ligne téléphonique pour transmettre sur la ligne téléphonique des informations correspondant à des incidents détectés par les capteurs et le transmetteur d'alarme fonctionnant conformément à un programme préalablement sélectionné par un usager, le système de programmation étant caractérisé en ce qu'il comprend un système d'information de l'état de la ligne téléphonique et un premier moyen de commutation adapté à connecter le transmetteur d'alarme en parallèle sur la ligne téléphonique, et en ce que, lorsque le système d'information indique que la ligne téléphonique a basculé de l'état de réception de la numérotation à l'état de faux appel, le premier moyen de commutation connecte le transmetteur d'alarme en parallèle sur la ligne téléphonique de sorte que le poste téléphonique peut être utilisé par l'usager comme organe de programmation du transmetteur d'alarme.

Il est bien connu que lorsque est décroché le combiné d'un poste téléphonique relié à une ligne téléphonique, l'impédance associée au poste téléphonique diminue sensiblement, de sorte que ce poste est alimenté en courant continu. La variation du courant de ligne est détectée par l'autocommutateur qui envoie alors une tonalité d'invitation à numéroter constituée par l'émission permanente de la fréquence 440 Hz. La ligne se trouve alors positionnée dans un état dit de réception de la numérotation, l'autocommutateur étant alors prêt à recevoir les signaux de numérotation générés par l'actionnement des touches du clavier du poste téléphonique. Si au bout d'un délai généralement environ égal à une minute, aucune numérotation n'a été exécutée alors que le combiné reste décroché, la ligne bascule dans un état de faux appel dans lequel l'autocommutateur envoie une tonalité constituée de la fréquence 440 Hz émise à la cadence 500 ms d'émission et 500 ms de silence. Dans cet état, l'autocommutateur ignore les signaux générés par l'actionnement des touches du clavier du poste téléphonique. En revanche, la ligne reste sous tension et, par conséquent, l'alimentation du poste reste assurée. Deux terminaux sur la même ligne de téléphone pouvant alors communiquer ensemble, le poste peut être utilisé comme organe de programmation de l'installation d'alarme.

Avantageusement, le système d'information sera assujetti à une temporisation qui laissera le temps à la ligne téléphonique de basculer de l'état de réception de la numérotation à l'état de faux appel.

Selon une autre variante, le système d'information sera assujetti à un moyen de mesure d'une grandeur du signal circulant sur la ligne téléphonique qui est différente selon que la ligne téléphonique est dans l'état de réception de la numérotation ou dans l'état de faux appel.

Avantageusement, le système comprend un commutateur de confirmation qui doit être enclenché pour permettre l'étape de passage en mode programmation, afin d'éviter une fausse manipulation, par exemple si le téléphone a été décroché par erreur.

Après l'étape de passage en mode programmation, un échange d'informations s'effectue entre le transmetteur d'alarme et le poste téléphonique.

Avantageusement, des signaux de synthèse vocale sont transmis au poste téléphonique de telle sorte que l'utilisateur va recevoir dans l'écouteur du combiné du poste téléphonique une séquence de consignes qu'il peut valider sélectivement en appuyant sur une des touches du clavier du poste téléphonique.

Selon un autre aspect de la présente invention, un second moyen de commutation est adapté à déconnecter le poste téléphonique de la ligne téléphonique.

Ce moyen de commutation sert à déconnecter le poste téléphonique lorsque l'installation d'alarme passe dans un mode d'alarme dans lequel la centrale d'alarme doit transmettre sur la ligne par l'intermédiaire du transmetteur téléphonique des informations correspondant à des incidents détectés par les capteurs.

L'invention propose aussi un procédé de programmation de transmetteur d'alarme pour une installation d'alarme centralisée, l'installation d'alarme étant installée dans une zone à surveiller desservie par une ligne téléphonique reliée à au moins un poste téléphonique et comprenant des capteurs répartis dans la zone à surveiller, une centrale d'alarme communiquant avec les capteurs et un transmetteur téléphonique raccordé à la centrale d'alarme et à la ligne téléphonique pour transmettre sur la ligne téléphonique des informations correspondant à des incidents détectés par les capteurs et le transmetteur d'alarme fonctionnant conformément à un programme préalablement sélectionné par un usager, le procédé de programmation étant caractérisé en ce qu'il comprend:
une étape de décrochage du poste téléphonique;
une étape d'attente de passage en mode faux appel;
une étape de passage en mode programmation;
une étape de programmation du transmetteur d'alarme par le poste téléphonique;
une étape de sortie du mode programmation.

Avantageusement, l'étape de passage en mode programmation se fait par connexion du transmetteur d'alarme en parallèle sur la ligne téléphonique.

Selon un premier mode de réalisation, l'étape de passage en mode faux appel est assujettie à une temporisation.

Selon un second mode de réalisation, l'étape de passage en mode faux appel est assujettie à une mesure d'une grandeur du signal circulant sur la ligne téléphonique.

Avantageusement, le procédé comprend une étape de confirmation de programmation entre l'étape de connexion et l'étape de programmation.

Avantageusement, l'étape de sortie de programmation correspond au raccrochement du téléphone.

Avantageusement, durant l'étape de programmation, des informations s'échangent entre le transmetteur d'alarme et le poste téléphonique.

Avantageusement, le transmetteur d'alarme envoie des signaux de synthèse vocale au téléphone.

Il n'est pas nécessaire d'alimenter le poste téléphonique à partir d'un organe de l'installation d'alarme puisque l'alimentation de ce poste reste assurée par le réseau téléphonique.

Selon un autre aspect de la présente invention, le poste téléphonique est du type à fréquence vocale.

L'invention, ses caractéristiques et ses avantages, ressortiront mieux de la description détaillée qui suit d'un exemple de réalisation d'un système de programmation de transmetteur d'alarme selon l'invention, en référence à la Fig. unique annexée qui représente de manière schématique un transmetteur d'alarme pour lequel est utilisé un système de programmation selon la présente invention.

De manière bien connue, une installation d'alarme comprend une centrale d'alarme et une pluralité de capteurs répartis dans une zone à surveiller. Les capteurs peuvent comprendre, par exemple, des détecteurs d'ouverture ou des détecteurs de mouvement. Les capteurs communiquent avec la centrale d'alarme par liaison radio.

En référence à la Fig. unique, un transmetteur téléphonique 40, raccordé à la centrale d'alarme, est prévu pour transmettre sur une ligne téléphonique 10 desservant la zone à surveiller des informations correspondant à des incidents détectés par les capteurs. A la ligne téléphonique 10, est associé au moins un poste téléphonique local 11 de type à fréquence vocale.

Le transmetteur téléphonique 40, piloté par une unité de commande 50, telle qu'un microcontrôleur, un microprocesseur ou un micro-ordinateur, est de type bien connu comprenant des organes de calcul, des organes de traitement de signaux reçus de la centrale d'alarme, des organes de détection de fréquences vocales reçues d'un poste téléphonique et des organes de synthèse vocale. En soi, un tel transmetteur est bien connu de l'homme du métier et il est inutile de le décrire en détail.

Un premier organe de commutation 20, de type interrupteur à deux voies, commandé par l'unité de commande 50, est interposé entre le transmetteur 40 et la ligne téléphonique 10. Dans une position d'ouverture de cet interrupteur, le transmetteur 40 est déconnecté de la ligne téléphonique 10. Dans une position de fermeture de cet interrupteur, le transmetteur 40 est connecté en parallèle sur cette ligne téléphonique.

L'unité de commande 50 comprend un système d'information 51. Ce système d'information 51 délivre une information sur l'état de la ligne téléphonique 10.

Pour évaluer l'état de la ligne téléphonique, le système d'information peut être assujetti à une temporisation qui se déclenche au moment où le téléphone est décroché et évalue le temps à partir duquel la ligne téléphonique 10 a basculé en mode faux appel, à partir de données connues, à savoir environ une minute.

Pour évaluer l'état de la ligne téléphonique, le système d'information peut aussi se baser sur un moyen de mesure 60 d'une grandeur (tension, intensité, fréquence, période) du signal circulant sur la ligne téléphonique 10.

L'information délivrée par le système informe l'unité de commande 50 de l'état de la ligne téléphonique 10.

Un second organe de commutation 30, de type interrupteur à deux voies, commandé par l'unité de commande 50, intervient sur la ligne téléphonique 10 juste avant le poste téléphonique local 11. Dans une position d'ouverture de cet interrupteur, le poste 11 est déconnecté de la ligne téléphonique 10. Dans une position de fermeture de cet interrupteur, le poste 11 est connecté sur cette ligne téléphonique.

Lorsque l'utilisateur veut programmer le transmetteur d'alarme 1, il décroche le combiné téléphonique du téléphone 11, puis il attend l'étape de passage en mode faux appel. Le transmetteur d'alarme passe alors en mode programmation et la programmation se fait par l'intermédiaire du téléphone 11. Pour sortir du mode programmation, il suffit de raccrocher le téléphone.

L'attente pour l'étape de passage en mode faux appel est déterminée par le système d'information 51, lié à la temporisation ou au moyen de mesure 60. Après l'étape de passage en mode faux appel, le système d'information 51 informe l'unité de commande 50 du passage de la ligne en mode faux appel. A ce moment là, l'unité de commande 50 commande la fermeture de l'interrupteur 20, ce qui a pour conséquence de connecter le transmetteur 40 en parallèle sur la ligne téléphonique 10, ce qui place le système en mode programmation.

Dès lors, l'actionnement d'une touche du clavier du poste téléphonique 11 aura pour conséquence l'envoi sur la ligne 10 d'un signal qui ne sera pas pris en compte par l'autocommutateur, du fait que la ligne est passée à l'état de faux appel, mais qui sera reçu par le transmetteur 40. De manière connue, des signaux de synthèse vocale sont alors transmis au poste téléphonique de telle sorte que l'utilisateur va recevoir dans l'écouteur du combiné du poste téléphonique une séquence de consignes qu'il peut valider sélectivement en appuyant sur une des touches du clavier du poste téléphonique afin de programmer le transmetteur.

Dans le cas où le téléphone est décroché par erreur, il peut être préférable d'éviter que le système passe en mode programmation. Un commutateur de confirmation (non représenté) peut être connecté par exemple à l'unité de commande 50 ou au transmetteur 40. Ce commutateur de confirmation devra alors être placé dans un certain mode par l'utilisateur pour permettre l'étape de passage en mode programmation. On aura alors une confirmation de la volonté de l'utilisateur de passer en mode programmation.

Pour sortir du mode programmation, on pourra utiliser le raccrochement du téléphone ou le basculement dans un autre état du commutateur de confirmation lorsque celui-ci sera présent.

Le second organe de commutation 30 sert à déconnecter le poste téléphonique 11 lorsque l'installation d'alarme passe dans un mode d'alarme dans lequel la centrale d'alarme doit transmettre sur la ligne par l'intermédiaire du transmetteur téléphonique des informations correspondant à des incidents détectés par les capteurs.

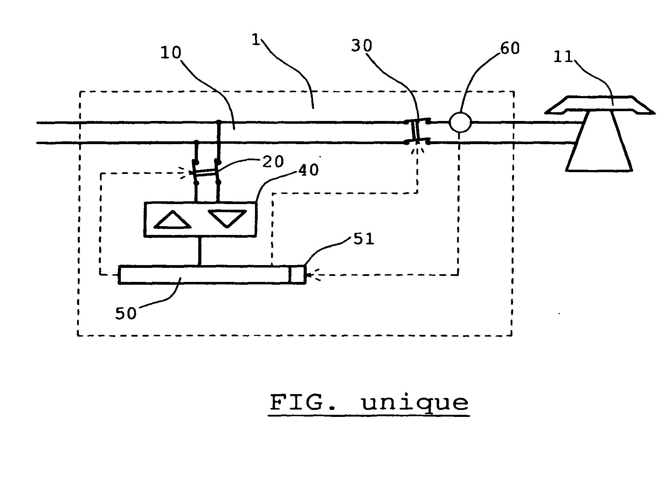

## Revendications

1. Système de programmation de transmetteur d'alarme (1) pour une installation d'alarme centralisée, l'installation d'alarme étant installée dans une zone à surveiller desservie par une ligne téléphonique (10) reliée à au moins un poste téléphonique (11) et comprenant des capteurs répartis dans la zone à surveiller, une centrale d'alarme communiquant avec les capteurs et un transmetteur téléphonique (40) raccordé à la centrale d'alarme et à la ligne téléphonique (10) pour transmettre sur la ligne téléphonique (10) des informations correspondant à des incidents détectés par les capteurs et le transmetteur d'alarme fonctionnant conformément à un programme préalablement sélectionné par un usager, le système de programmation (1) étant **caractérisé en ce qu'**il comprend un système d'information (51) sur l'état de la ligne téléphonique (10) et un premier moyen de commutation (20) adapté à connecter le transmetteur d'alarme (40) en parallèle sur la ligne téléphonique (10) lorsque le système d'information indique que la ligne téléphonique (10) a basculé de l'état de réception de la numérotation à l'état de faux appel, de sorte que le poste téléphonique (11) peut être utilisé par l'usager comme organe de programmation du transmetteur d'alarme (40).

2. Système de programmation selon la revendication 1, **caractérisé en ce que** le système d'information (51) est assujetti à une temporisation.

3. Système de programmation selon la revendication 1, **caractérisé en ce que** le système d'information (51) est assujetti à un moyen de mesure (60) d'une grandeur du signal circulant sur la ligne téléphonique (10).

4. Système de programmation selon l'une des revendications 1 à 3, **caractérisé en ce que** le système (1) comprend un commutateur de confirmation de passage en mode programmation.

5. Système de programmation selon l'une des revendications 1 à 4, **caractérisé en ce que**, dans une phase de programmation du transmetteur d'alarme, le premier moyen de commutation (20) ayant connecté le transmetteur d'alarme (40) en parallèle sur la ligne téléphonique (10), un échange d'informations est effectué entre le transmetteur d'alarme et le poste téléphonique (11).

6. Système de programmation selon la revendication 5, **caractérisé en ce que** des signaux de synthèse vocale sont transmis au poste téléphonique (11) de telle sorte qu'un utilisateur reçoit dans l'écouteur du combiné du poste téléphonique une séquence de consignes qu'il peut valider sélectivement en appuyant sur une des touches du clavier du poste téléphonique.

7. Système de programmation selon l'une quelconque des revendications précédentes, **caractérisé en ce qu'**un second moyen de commutation (30) est adapté à déconnecter le poste téléphonique (11) de la ligne téléphonique (10).

8. Procédé de programmation de transmetteur d'alarme (1) pour une installation d'alarme centralisée, l'installation d'alarme étant installée dans une zone à surveiller desservie par une ligne téléphonique (10) reliée à au moins un poste téléphonique (11) et comprenant des capteurs répartis dans la zone à surveiller, une centrale d'alarme communiquant avec les capteurs et un transmetteur téléphonique (40) raccordé à la centrale d'alarme et à la ligne téléphonique (10) pour transmettre sur la ligne téléphonique (10) des informations correspondant à des incidents détectés par les capteurs et le transmetteur d'alarme fonctionnant conformément à un programme préalablement sélectionné par un usager, le procédé de programmation étant **caractérisé en ce qu'**il comprend:
une étape de décrochage du poste téléphonique;
une étape d'attente de passage en mode faux appel;
une étape de passage en mode programmation;
une étape de programmation du transmetteur d'alarme (40) par le poste téléphonique (11);
une étape de sortie du mode programmation.

9. Procédé de programmation selon la revendication 8, **caractérisé en ce que** l'étape de passage en mode programmation se fait par connexion du transmetteur d'alarme (40) en parallèle sur la ligne téléphonique (10).

10. Procédé de programmation selon la revendication 8 ou 9, **caractérisé en ce que** l'étape de passage en mode faux appel est assujettie à une temporisation.

11. Procédé de programmation selon la revendication 8 ou 9, **caractérisé en ce que** l'étape de passage en mode faux appel est assujettie à une mesure d'une grandeur du signal circulant sur la ligne téléphonique (10).

12. Procédé de programmation selon l'une des revendications 8 à 11, **caractérisé en ce qu'**il comprend une étape de confirmation de programmation entre l'étape de connexion et l'étape de programmation.

13. Procédé de programmation selon l'une des revendications 8 à 12, **caractérisé en ce que** l'étape de sortie de programmation correspond au raccrochement du téléphone (11).

14. Procédé de programmation selon l'une des revendications 8 à 12, **caractérisé en ce que** durant l'étape de programmation, des informations s'échangent entre le transmetteur d'alarme (40) et le poste téléphonique (11).

15. Procédé de programmation selon la revendication 14, **caractérisé en ce que** le transmetteur d'alarme (40) envoie des signaux de synthèse vocale au téléphone (11).

## Claims

1. System for programming an alarm transmitter (1) for a centralised alarm installation, the alarm installation being installed in a zone to be monitored served by a telephone line (10) connected to at least one telephone set (11) and comprising sensors distributed within the zone to be monitored, an alarm centre communicating with the sensors and a telephone transmitter (40) connected to the alarm centre and to the telephone line (10) in order to transmit information over the telephone line (10) corresponding to incidents detected by the sensors and the alarm transmitter operating in conformity with a programme previously selected by a user, the programming system (1) being **characterised in that** it comprises a system for information (51) on the state of the telephone line (10) and a first switching means (20) adapted to connect the alarm transmitter (40) in parallel with the telephone line (10) when the information system indicates that the telephone line (10) has switched from the dialling receiving state to the receiver off the hook state such that the telephone set (11) can be used by the user as the means for programming the alarm transmitter (40).

2. Programming system according to claim 1, **characterised in that** the information system (51) is controlled by a delay.

3. Programming system according to claim 1, **characterised in that** the information system (51) is controlled by a means for measurement (60) of a variable of the signal passing over the telephone line (10).

4. Programming system according to one of claims 1 to 3, **characterised in that** the system (1) comprises a switch for confirming the change to the programming mode.

5. Programming system according to one of claims 1 to 4, **characterised in that** in an alarm transmitter programming phase, the first switching means (20) having connected the alarm transmitter (40) in parallel with the telephone line (10), an exchange of information is effected between the alarm transmitter and the telephone set (11).

6. Programming system according to claim 5, **characterised in that** voice synthesis signals are transmitted to the telephone set (11) such that a user receives in the ear phone of the handset of the telephone set a sequence of instructions which he can validate selectively by pressing one of the keys on the keypad of the telephone set.

7. Programming system according to any one of the preceding claims, **characterised in that** a second switching means (30) is adapted to disconnect the telephone set (11) from the telephone line (10).

8. Method for programming an alarm transmitter (1) for a centralised alarm installation, the alarm installation being installed in a zone to be monitored served by a telephone line (10) connected to at least one telephone set (11) and comprising sensors distributed within the zone to be monitored, an alarm centre communicating with the sensors and a telephone transmitter (40) connected to the alarm centre and to the telephone line (10) in order to transmit information over the telephone line (10) corresponding to incidents detected by the sensors and the alarm transmitter operating in conformity with a programme previously selected by a user, the programming method being **characterised in that** it comprises:
- a step for taking the telephone receiver off the hook;
- a step for delaying changing to the receiver off the hook mode;
- a step for changing to the programming mode;
- a step for programming the alarm transmitter (40) by means of the telephone set (11);
- a step for exiting from the programming mode.

9. Programming method according to claim 8, **characterised in that** the step for changing to the programming mode is effected by connecting the alarm transmitter (40) in parallel with the telephone line (10).

10. Programming method according to claim 8 or 9, **characterised in that** the step for changing to the receiver off the hook mode is controlled by a delay.

11. Programming method according to claim 8 or 9, **characterised in that** the step for changing to the receiver off the hook mode is controlled by a measurement of a variable of the signal passing over the telephone line (10).

12. Programming method according to one of claims 8 to 11, **characterised in that** it comprises a step for confirming programming between the connecting step and the programming step.

13. Programming method according to one of claims 8 to 12, **characterised in that** the step for exiting from the programming corresponds to replacing the telephone receiver (11) on the hook.

14. Programming method according to one of claims 8 to 12, **characterised in that** during the programming step information is exchanged between the alarm transmitter (40) and the telephone set (11).

15. Programming method according to claim 14, **characterised in that** the alarm transmitter (40) sends voice synthesis signals to the telephone (11).

## Patentansprüche

1. System zur Programmierung eines Alarmsenders (1) für eine zentralisierte Alarmanlage , wobei die Alarmanlage in einem zu überwachenden Bereich installiert ist, welcher über eine Telefonleitung (10) gesteuert wird, die mit wenigstens einem Telefongerät (11) verbunden ist und in dem zu überwachenden Bereich verteilte Messfühler, eine mit den Messfühlern kommunizierende Alarmzentrale und eine telefonische Sendestation (40) besitzt, die mit der Alarmzentrale und der Telefonleitung (10) verbunden ist, um Informationen, die sich auf von den Messfühlern festgestellte Zwischenfälle beziehen, auf die Telefonleitung (10) zu übertragen, und wobei der Alarmsender auf ein zuvor von einem Benutzer ausgewähltes Programm anspricht, wobei das Programmiersystem (1) **dadurch gekennzeichnet ist, dass** es ein Informationssystem (51) über den Zustand der Telefonleitung (10) und ein erstes Schaltmittel (20) umfasst, welches den Alarmsender (40) parallel mit der Telefonleitung (10) verbindet, wenn das Informationssystem anzeigt, dass die Telefonleitung (10) vom Empfangszustand des Wählens in den Zustand des Falschanrufs übergewechselt ist, so dass das Telefongerät (11) vom Benutzer als Programmiergerät des Alarmsenders (40) verwendet werden kann.

2. System zur Programmierung nach Anspruch 1, **dadurch gekennzeichnet, dass** das Informationssystem (51) einer Verzögerung unterworfen ist.

3. System zur Programmierung nach Anspruch 1, **dadurch gekennzeichnet, dass** das Informationssystem (51) von einem Messmittel (60) abhängt, welches so groß ist wie das in der Telefonleitung (10) zirkulierende Signal.

4. System zur Programmierung nach einem der Ansprüche 1 bis 3, **dadurch gekennzeichnet, dass** das System (1) einen Schalter zur Bestätigung des Übergangs in den Programmier-Modus umfasst.

5. System zur Programmierung nach einem der Ansprüche 1 bis 4, **dadurch gekennzeichnet, dass** in einer Programmierphase des Alarmsenders, nachdem das erste Schaltmittel (20) den Alarmsender (40) parallel über die Telefonleitung (10) verbunden hat, ein Informationsaustausch zwischen dem Alarmsender und dem Telefongerät (11) stattfindet.

6. System zur Programmierung nach Anspruch 5, **dadurch gekennzeichnet, dass** Vokalsynthese-Signale an das Telefongerät (11) übertragen werden, der Art, dass ein Benutzer im Hörer des Mehrzweck-Telefongerätes eine Folge von Einstell-Anweisungen empfängt, welche er wahlweise abrufen kann, indem er auf eine der Tasten des Telefongerätes drückt.

7. System zur Programmierung nach einem der vorangehenden Ansprüche, **dadurch gekennzeichnet, dass** ein zweites Schaltmittel (30) das Telefongerät (11) von der Telefonleitung (10) trennt.

8. Verfahren zur Programmierung eines Alarmsenders (1) für eine zentralisierte Alarmanlage, wobei die Alarmanlage in einem zu überwachenden Bereich installiert ist, welcher über eine Telefonleitung (10) gesteuert wird, die mit wenigstens einem Telefongerät (11) verbunden ist und in dem zu überwachenden Bereich verteilte Messfühler, eine mit den Messfühlern kommunizierende Alarmzentrale und eine telefonische Sendestation (40) umfasst, die mit der Alarmzentrale und der Telefonleitung (10) verbunden ist, um Informationen, die sich auf von den Messfühlern festgestellte Zwischenfälle beziehen, auf die Telefonleitung (10) zu übertragen, und wobei der Alarmsender auf ein zuvor vom Benutzer ausgewähltes Programm anspricht, wobei das Verfahren zur Programmierung **dadurch gekennzeichnet ist, dass** es umfasst:
eine Stufe des Abnehmens des Telefonhörers;
eine Stufe der Wartezeit zum Übergang in den Modus des Falschanrufs;
eine Stufe des Übergangs in den Programmier-Modus;
eine Stufe des Programmierens des Alarmsenders (40) durch das Telefongerät (11);
eine Stufe des Verlassens des Programmier-Modus.

9. Verfahren zur Programmierung nach Anspruch 8, **dadurch gekennzeichnet, dass** die Stufe des Übergangs in den Programmier-Modus durch Verbindung des Alarmsenders (40) parallel über die Telefonleitung (10) erfolgt.

10. Verfahren zur Programmierung nach Anspruch 8 oder 9, **dadurch gekennzeichnet, dass** die Stufe des Übergangs in den Modus des Falschanrufs einer Verzögerung unterworfen ist.

11. Verfahren zur Programmierung nach Anspruch 8 oder 9, **dadurch gekennzeichnet, dass** die Stufe des Übergangs in den Modus des Falschanrufs von einer Messung einer Größe des in der Telefonleitung (10) zirkulierenden Signals abhängt.

12. Verfahren zur Programmierung nach einem der Ansprüche 8 bis 11, **dadurch gekennzeichnet, dass** es eine Stufe der Bestätigung der Programmierung zwischen der Stufe des Verbindens und der Stufe des Programmierens umfasst.

13. Verfahren zur Programmierung nach einem der Ansprüche 8 bis 12, **dadurch gekennzeichnet, dass** die Stufe des Verlassens der Programmierung dem Auflegen des Telefonhörers (11) entspricht.

14. Verfahren zur Programmierung nach einem der Ansprüche 8 bis 12, **dadurch gekennzeichnet, dass** während der Stufe des Programmierens Informationen zwischen dem Alarmsender (40) und dem Telefongerät (11) ausgetauscht werden.

15. Verfahren zur Programmierung nach Anspruch 14, **dadurch gekennzeichnet, dass** der Alarmsender (40) Vokalsynthese-Signale an das Telefongerät (11) aussendet.
